Europäisches Patentamt

European Patent Office

Office européen des brevets

(19)

(11) Publication number: **0 214 044**
**A2**

(12) # EUROPEAN PATENT APPLICATION

(21) Application number: **86401827.0**

(22) Date of filing: **18.08.86**

(51) Int. Cl.⁴: **A 23 L 1/164**

(30) Priority: **23.08.85 US 768855**

(43) Date of publication of application:
**11.03.87 Bulletin 87/11**

(84) Designated Contracting States:
**AT BE CH DE FR GB IT LI LU NL SE**

(71) Applicant: NABISCO BRANDS, INC.
100 DeForest Avenue
East Hanover New Jersey 07936(US)

(72) Inventor: Karwowski, Jan
70 Ewing Avenue
Franklin Lakes New Jersey 07417(US)

(72) Inventor: Bangert, James G.
15 Pigeon Hill Road
Nanuet New York 10954(US)

(74) Representative: Bonnetat, Christian et al,
Cabinet PROPI Conseils 23 rue de Léningrad
F-75008 Paris(FR)

(54) Improved method of preparing instant, flaked, wheat farina.

(57) Process of preparing a dry, instant, wheat farina-like product in flake form which will readily rehydrate upon the addition of hot water. The wetted farina is tempered, preferably with agitation, to produce a material having uniform moisture. The tempered material is cooked, the average particle size of the cooked material being increased thereby. The average particle size of the cooked material is then reduced.

The dried, flaked product can be made ready-to-eat by reconstituting in a bowl with hot water, milk or other suitable edible liquid containing water. The dried, flaked product is in a ready-to-eat or instant form and is truly an "instant" wheat farina-like product which can be prepared in a bowl by the consumer without a cooking step.

./...

Storage Tanks → Separation → Conveyor System → Ribbon Mixer → Conveyor System → Cooker or Continuous Cooker → Conveyor → Mill or Lump Breaker → Conveyor → Dryer → Scalper → Conveyor → Storage → Surge Hopper → Conveyor → Feeder → Flaking Rolls

Water Meter → Tank → Pump → Spray Nozzles → Ribbon Mixer

Scalper → Mill

Dryer ← Mill

Flaking Rolls → Conveyor → Sifter → Storage → Blending with Fortification, Etc.

## IMPROVED METHOD OF PREPARING

## INSTANT, FLAKED, WHEAT FARINA

The invention relates to processes of preparing instant wheat cereals and other instant cereal grain preparation. The invention also relates to instant or ready-to-eat wheat cereals and other instant cereal grain preparations.

Ready-to-eat cereals are available in a variety of forms and are normally consumed with milk and sometimes sugar. Flaked varieties are very popular. During processing the starch is gelatinized, halting enzymic reactions and thus providing product stability and good shelf life.

Process for the manufacture of cold-eating wheat flakes from kernels of wheat are known. In one such process, after cleaning and classifying according to size, the wheat is tempered with added moisture in steel bins of small diameter at approximately 27°C (80°F.) for 24 hours. The wheat can be transferred one or more times during this period if such a procedure is necessary in order to keep the temperature within reasonable limits. After tempering, the wheat is steamed at atmospheric pressure until it reaches about 95°C (203°F.) and 21 percent moisture. The steamed wheat is "bumped" between smooth steel rollers set considerably farther apart than are flaking rolls. Such treatment flattens the grain slightly and ruptures the bran coat in several places making the kernel more permeable to the moisture added during the cooking step. The flattened kernels are transferred to the pressure cookers, which are similar to those used for corn flakes, and the other ingredients are added. Such other ingredients include sugars, salt, malt, and sometimes a coloring substance such as caramel.

The process continues with the retort contents being cooked at 20 p.s.i. steam pressure for 90 minutes while the vessel rotates slowly. After cooking, the grains are soft, translucent and brown, and they contain about 45 to 50 percent moisture. The starch has, of course, been completely gelatinized. Rotation of the opened retort dumps the contents onto a moving belt which transfers the cooked mass to a chute leading to a "Wiggler." The Wiggler consists of a horizontal perforated disc, through which warm air is blown in an upward direction, and a rotating arm carrying vertically-oriented inflexible fingers around its upper surface. The clumps of slightly adherent grain are dropped onto the center of the perforated disc and are broken up and the individual grains moved to the outer edge of the disc by the moving fingers. The individual grains fall from the edge of the disc and are transferred pneumatically to a horizontal rotating cylinder fitted with internal louvers. In this drier, air at 121° to 149°C (250° to 300°F.) is passed over the grain, reducing it to 28 to 31 percent moisture. Holding bins are used to store the material until it can be transferred to the presses. At this point, the grains are still intact and are rather tough and chewy in texture. Subsequent processing is designed to secure the desired crispness. First, the wheat pieces travel through a drier. This can be a Proctor and Schwarz drier composed of 3 sections, the first at 138°C (280°F.), the second at 143°C (290°F.) and the third unheated. Rate of movement of the material is adjusted to yield a product containing about 21 percent moisture. A spray of B-complex vitamins is applied at this stage.

Screw conveyors or drag chain conveyors, in the process, transport the partially dried pellets to the flaking rolls. Just before falling into the flaking rolls, the pellets are heated to about 82° to 88°C (180° to 190°F.) and they become plasticized. The large steel flaking rolls are practically identical with those used for making corn flakes. The pressure applied to the pellets increases their diameter several times and decreases their thickness proportionately. When they leave the rolls, the flakes contain 10 to 15 percent moisture and are still slightly flexible. To obtain the desired crispness, they are toasted and dehydrated to less than 3 percent moisture content in a drier with a perforated travelling metal belt. Temperature in the oven may be divided into 4 regions; for example, heated sections at 154°, 149° and 138°C (310°, 300° and 280°F.), and an unheated section to partially cool the product. The decreasing temperature is said to promote the development of the desirable curling and blistering.

Methods of producing corn flakes are also known. In one such method, corn is milled to produce large pieces free of germ and bran. The corn grits are placed in a cylindrical pressure cooker along with flavoring syrup consisting of sugar, malt (nondiastatic), salt and water. During the cooking period, the charge accumulates additional water from the steam introduced into the retort, the moisture content rising to about 33 percent. Cooking is done in the slowly rotating retort at 15 to 23 p.s.i. steam pressure for 1 to 2 hours. After cooking, the pressure is reduced to the atmospheric level, the retort is opened and the contents are dumped out onto a moving belt. After the lumps from the cooker are broken down to individual particles by a revolving reel, they are dried. The dried particles contain 19 to 23 percent moisture, but this water is unevenly distributed, so the material is transferred to tempering bins for several hours (as many as 24) so that the moisture can equilibrate. After tempering, the hard, dark brown grits are ready for flaking. The flaking rolls are steel cylinders cooled by internal circulation of water. The cooked dried grits are pressed into thin flakes as they pass through the rolls. The product is still rather flexible at this time, lacking the desired crispness and flavor of the finished corn flake. From the rolls, the flakes pass directly to the rotating toasting ovens, which are usually gas fired. In addition to being thoroughly dehydrated by the process, the flakes are toasted and blistered. They emerge from the oven with less than 3 percent moisture. The corn flakes are then cooled in expansion bins.

The invention involves a process for preparing a dry, instant, wheat farina or farina-like product in flake form which will readily rehydrate with hot water. The invention does not produce a cold eating product; instead the invention produces a product that needs reconstituting with hot water. The process includes impregnating or admixing wheat farina or farina-type material with a sufficient amount of water to saturate the material, that is, 15 to 20 weight percent of water, based on the total dry weight of the wheat farina or farina-like material. Any wheat particles can be used which are in a reduced size state, although farina size is preferred. The water-impregnated material is tempered to produce a tempered material at uniform moisture. The tempered material is sufficiently cooked to gelatinize the starch present in the farina. The cooking increases the average particle size of the

6

0214044

material. The cooked material usually has a water content of 15 to 26 weight percent. The average particle size of the cooked material is then reduced, for example, by grinding or breaking. The reduced-sized cooked material is then partially dried to provide a partially-dried material having a water content of 14 weight percent or less. The partially-dried material can be admixed with sufficient water to raise the water content of the material up to 14 weight percent or less if the partial drying step lowers the water content of the material too far. The water impregnated material is tempered to produce a tempered material at uniform moisture. The cooked, particulate material is flaked at a temperature of less than 49°C (120°F.) to form a material in flake form. The flaking could be termed low water-content flaking due to the high water content of the material being flaked. The cooked, particulate material to be flaked and the material in flake form after flaking each has a water content of 14 weight percent or less - the material undergoes insignificant water loss during flaking. The flaked material does not have to be dried.

The material is a dry, non-expanded, non-toasted, non-puffed product in flaked form.

The flaked product of the invention is not toasted and not expanded. The dry, flake product is capable of being readily rehydrated or reconstituted by the addition thereto of hot water or a hot liquid containing water. The dry, flaked, instant, wheat farina or farina-like product upon rehydration has the flavor and texture characteristics and physical appearance of cooked farina. The rehydrated flake product is appetizing and readily digestible, and is creamy and smooth.

No guar gum or alginate, such as, Keltrol F, is added or used during the invention process of preparing the dry, flaked, instant, wheat farina or farina-like product of the invention. However, optionally gums or alginates, such as, guar gum or arabic gum, can be used in the final formulation (after flaking) of the invention flaked product. After the processing of the flaked material is finished, some guar gum can be added by being carried in with the sugars and flavorants. Such optional gums help hold the product together and help increase the viscosity in the rehydrated product.

An earlier invention involves a process of preparing a dry, instant, wheat farina or farina-like product in flake form. Such process includes: admixing guar gum powder and wheat farina or farina-like material; admixing water with such admixture; tempering the water-impregnated admixture; cooking the tempered admixture; reducing the particle size of the cooked material; drying the cooked material to a water content of 14 percent or less ; tempering the dried material;

and then, flaking the dried material.

Compared to the flakes of such earlier invention, the flakes of the present invention have less bulk density and are thinner. The flakes of the present invention usually have a bulk density of 48 to 50 g per 100 cc and a thickness of 0.01 to 0.012 of an inch; the flakes of the earlier invention normally have a bulk density of 54 to 56 g per 100 cc and are thicker. The flakes of the present invention have a particle size of -4 to +60 mesh U.S. Standard Sieve Series. The flakes of the present invention are larger. Previously (in the prior invention) the preflaking normally results in particles of -12 mesh U.S. Standard Sieve Series to -8 mesh U.S. Standard Sieve Series.

The farina of the present invention is more uniformly cooked with more agglomeration during the cooking than is the case with the prior invention. There is no guar gum included in the present invention to compete for the water during cooking.

The rehydrated instant cereal of the present invention has improved texture, is softer, is creamier, rehydrates faster, swells up more upon hydration, and has less grittiness than the rehydrated instant cereal of the prior invention.

In order to obtain the large size flakes of the invention, the following factors are important:

- the increased size and agglomeration by cooking.

- reduction of oversized particles (no larger than 1/2 inch).

- the drier uses the large sizes.

- the tempering uses the large sizes.

- larger particles before flaking.

The dry, instant, flaked, wheat farina or farina-like product of the invention can be mixed with an instant oat product to provide an oat/wheat instant cereal product.

As used herein the terms "instant" and "ready-to-eat" mean a product that does not require a cooking step by the consumer, i.e., a product that can be prepared for use simply by adding hot water or hot milk to it and mixing it in a cereal bowl.

In the following disclosure, the letters in parenthesis refer to the steps of (original) Claim 1 below or the materials in such steps.

The wheat farina or farina-type material(s) is preferably impregnated with water by spraying. The wheat farina or farina-type material is impregnated with 15 to 20 weight percent (preferably about 18 weight percent) of water based on the total dry weight of the wheat farina or farina-type material.

Water-impregnated material (a) is tempered preferably at a temperature of 32° to 40°C for about 5 to 20 minutes (preferably about 10 minutes) but not more than one hour. A moisture content of 15 to 20 percent by weight, preferably about 18 percent by weight, based on the total dry weight of the wheat farina or farina-type material, is achieved during the tempering. Preferably, the tempering is achieved with agitation, which keeps the material free-flowing. The purpose of the tempering is to achieve or assure a uniform moisture content throughout the particles of water-impregnated material (a). The tempering shortens the time needed in the subsequent cooking step and produces a more uniform product.

Tempered material (b) is cooked sufficiently to gelatinize the starch present in the farina. Tempered material (b) is cooked preferably at a temperature of 110° to 120°C, at a pressure of 10 to 15 p.s.i. for 10 to 30 minutes. The cooking is done in a steam cooker. Tempered material (b) is most preferably cooked at a temperature of about 120°C, at a pressure of about 15 p.s.i., for about 12 minutes. The cooking increases the average particle size of tempered material (b); preferably the increase in the average particle size is from number 12 to number 40 mesh (U.S. Standard). The tempering enhances the subsequent cooking.

It is particularly advantageous to affect the cooking using the continuous cooker of U.S. Patent No. 3,246,594, which discloses an apparatus for carrying out the continuous cooking process. This apparatus includes a cooking container for the pressure cooking, mixing and conditioning of the cereal materials therein, means for continuously urging the materials through this cooking container, and feeding means for receiving the materials to be cooked and for feeding thereof into the container continuously against superatmospheric pressure therein. The feeding means includes means for compacting the materials into a pressure-resistant plug to resist escape of pressure from the cooking container, and rotating means rotating counter to the compacting means for breaking materials from the inner end of the plug for the feeding thereof into the cooking container. There is means for supplying steam at superatmospheric pressure to the cooking container. There is also a pressure extrusion assembly in flow communication with the cooking container, for receiving therefrom the materials after the cooking, while forming a barrier for maintaining the superatmospheric pressure therein, and effecting extrusion of the cooked material into atmospheric pressure for expansion of the cooked material upon emergence from the apparatus and means for sequentially cutting the extruded material into the expanded pellets is supplied.

Any suitable continuous or batch cooking technique can be used.

The particle size reduction step eliminates the big lumps. Preferably, the average particle size of cooked material (c) is reduced by means of lump breakers, or even by grinding. Preferably, the average particle size of cooked material (c̄) is reduced to less than 0.5 inch. Cooked, particulate material (d) can have a moisture content of 15 to 20 percent by weight, although it usually as high as 23 to 26 percent by weight, based on the total dry weight of the wheat farina-type material.

Reduced-size material (d) is partially dried to provide partially dried material (e) having a water content of 14 weight percent or less (say 10 or 11 weight percent), preferably 12 to 14 weight percent. The purpose of the partial drying is to lower the water content to the level desired for the flaking step.

If the drying results in too low of a moisture level, partially-dried material (e) can be admixed with a sufficient water to provide water-impregnated material containing 12 to 14 weight percent of water.

Water-impregnated material (e) is tempered preferably at a temperature of 32° to 40°C for about 30 to 60 minutes (preferably about 40 minutes). A moisture content of 14 percent by weight or less, preferably 10 to 14 percent by weight, based on the total dry weight of the wheat farina or farina-type material, is achieved during the tempering. Preferably, the tempering is achieved with agitation, which keeps the material free-flowing. The purpose of the tempering is to assure a uniform moisture content throughout the particles of water-impregnated material (e) for the subsequent flaking step.

The flaking is achieved such that the temperature of the material to be flaked during flaking does not exceed 49°C (120°F.). Flaked material (g) has a moisture content of 14 weight percent or less, preferably 12 to 14 weight percent, based on the dry total weight of the wheat farina or farina-like product. (Flaking is done at a maximum of 14 weight percent of water.) Conveying of the flakes to the drier cools the flakes.

Flakes (g) of the product preferably have an average thickness of about 0.01 to about 0.012 inch.

The flakes (g) are flexible and preferably have a thickness of about 0.011 inch.

At this point the flakes are preferably sifted to provide flakes of a range of -6 to +50 U.S. mesh Standard Sieve Series. The product has a wide and varied flake size.

The flakes have sufficient toughness to be conveyed pneumatically; there is no major destruction of the flakes during such transportation.

For storage purposes, preferably the dry, flaked product is placed in sealed containers.

The liquid used to reconstitute the dry, flaked product preferably is hot water or hot milk. Essentially no lumps are formed upon reconstitution or rehydration of the dry, flaked product.

Preferably about 6 to 30 weight percent, based on the total weight of dry, flaked, particulate material (g), of at least one fortifying agent is added to dry, flaked, particulate material (g). Other conventional ingredients can be added.

The instant wheat flakes of the invention can be admixed with instant oats or other instant cereal grains to obtain an oats-wheat or multi-grain instant cereal product. Any ratio of instant oats or instant wheat flakes can be used, with the ratio normally ranging from 90:10 to 10:90.

The invention includes the dry, non-expanded, instant, wheat farina or farina-like product in flake form prepared by the processes of the invention. The instant flake product of the invention is not a toasted product. The instant product has excellent flavor and texture characteristics, with good stability and shelf life. The instant product has mouth feel, flavor, consistency and other organoleptic properties similar to those normally possessed by conventional "hot" farina cereals which require extended cooking, while having the advantage of quick and convenient preparation by the consumer. The invention product is more flexible, swells up more upon hydration, and rehydrates quicker than other instant wheat flaked products. The invention product avoids the prior art problems of scorching, lumping, sticking to the pan, etc. The invention wheat product can be taken from its sealed package, placed in a bowl, hot water or hot milk added, stirred lightly, sugar, cream and fruit added, if desired, and then consumed. The rehydrated invention product is creamier, less gritty, smoother and softer than other rehydrated, instant, wheat flaked cereals. By allowing some larger flakes to remain in with the smaller particles provides a smoother tasting rehydrated product.

The invention also broadly includes the process for preparing a dry, non-expanded, instant, cereal grain farina product in flake form which will readily rehydrate with hot water. Cereal grain material, which is cereal grain particles in reduced-size state, is impregnated with a sufficient amount of water to saturate the cereal grain material. The water-impregnated material is tempered to produce a tempered material at uniform moisture. The tempered material is cooked sufficiently to gelatinize the starch present in the cereal grain material. The average particle size of the material is increased thereby. The average particle size of cooked material is reduced (the cooked material being in particulate form). The material is partially dried to provide partially-dried material having a water content of 14 or less weight percent, based on the total dry weight of the cereal grain material. The material is tempered to produce a tempered material at uniform moisture. The cooked, particulate material is flaked to form material in flake form. The dry, flaked product is capable of being readily rehydrated to have the texture and flavor characteristics of cooked grain farina.

The invention further broadly includes the dry non-expanded, non-toasted, instant, cereal grain farina product in thin flake form which is capable of readily rehydrating upon contact with hot water or hot milk, with increased swelling, to have the texture and flavor characteristics of cooked cereal grain farina.

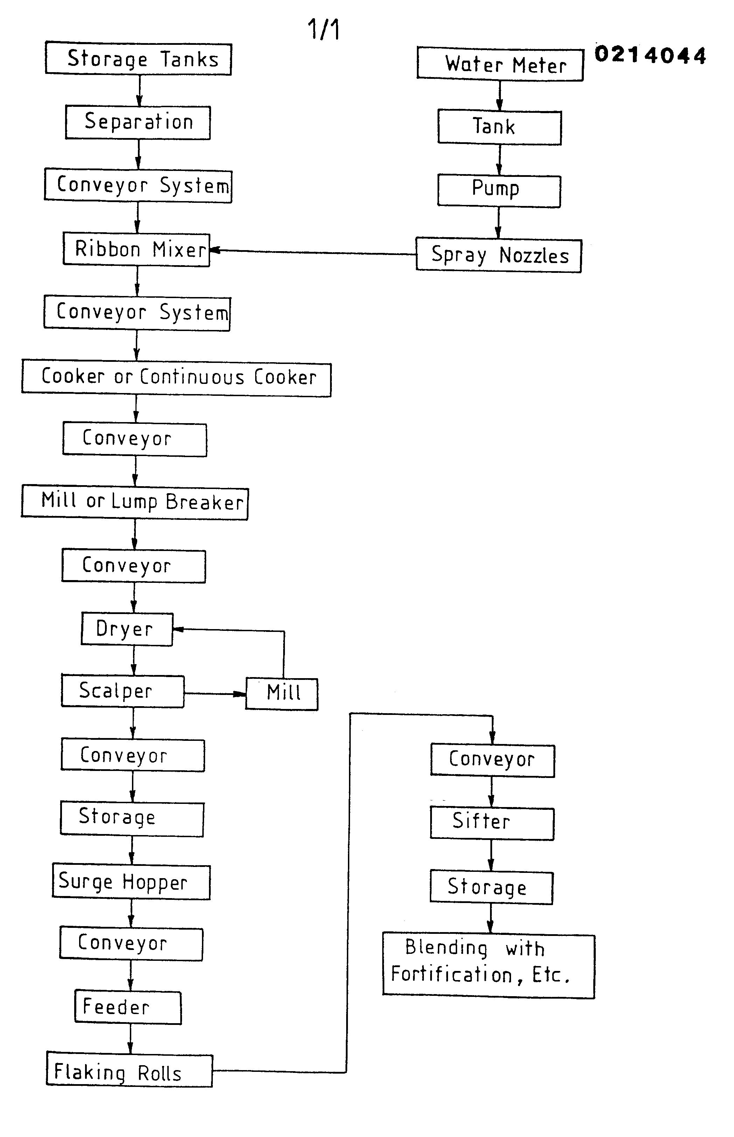

## BRIEF DESCRIPTION OF THE DRAWING

In the drawing:

The Figure is a schematic diagram illustrating the steps of a preferred embodiment of the invention process.

As used herein, all parts, percentages, ratios and proportions are on a weight basis unless otherwise stated herein or otherwise obvious herefrom to one skilled in the art.

The invention product is a ready-to-eat or instant cereal prepared from at least one wheat farina or farina-like product, such as, wheat middlings. The wheat used must have been subdivided into any reduced-size state, but preferably into the farina state. The farina used usually has an average particle size between about 20 and 40 mesh (U.S. Standard). The Federal Specification for farina requires that: 100 percent of the product passes through a U.S. Standard No. 20 woven-wire-cloth sieve; not more than 10.0 percent passes through a U.S. Standard No. 45 sieve; and not more than 3.0 percent passes through a U.S. Standard No. 100 sieve.

Flour by-products, derived from the outer coverings of the wheat grain, separated in extraction of the flour from the grain, are bran and the finer, more floury outer coverings, termed middlings. The middlings produced in flour milling, essentially small pieces of endosperm free from bran and germ, are termed farina. The composition of middlings can vary a great deal depending on the wheat used and the amount of endosperm present.  In the manufacture of farina, it is necessary to use hard wheat as a raw material, since soft wheat yields a product which becomes excessively pasty upon cooking.  Typical wheat coarse middlings contain 19.0 percent of protein, 5.8 percent of fat, 65.0 percent of carbohydrates, 6.0 percent of fiber and 4.20 percent of ash.  Typical wheat fine middlings contain 18.0 percent of protein, 3.9 percent of fat, 73.1 percent of carbohydrates, 2.2 percent of fiber and 2.8 percent of ash.

The dry wheat farina or farina-like material, at this stage in the process, can also be mixed with additional ingredients, such as vitamins, minerals, flavoring and antioxidants.  Such additional ingredients should not usually be present in an amount greater than 40 weight percent, based on the total dry weight of the dry wheat farina or farina-like material.  Vitamins, if added during the invention process, are preferably added to a dry composition.  Usually salt (NaCl) in the amount of about 0.5 to 4.0 percent by weight is added, although some of the NaCl can be replaced by KCl.

The dry wheat farina or farina-like material is impregnated with water in an amount of about 15 to 20 weight percent, preferably about 18 percent, based on the total weight of the dry wheat farina or farina-like material.  It is best to completely saturate the wheat farina or farina-like material even to the extent of having visible excess water present in the wetted material. The wheat farina-like material should not be wetted to such an extent that it becomes a dispersion-solution. The farina or farina-like material is preferably impregnated with water by spraying the water onto the material, although any other suitable water impregnation technique can be used.

The water-impregnation material is then tempered using any suitable tempering technique and equipment. For example, the tempering and agitation can be done in a ribbon blender or Hobart mixer. The tempering is usually done at a temperature of 30° to 40°C for 5 to 60 minutes, preferably at a temperature of 32°C for about 15 to 30 minutes. The tempering can be done at, below or above atmospheric pressure. The tempering reduces the time required for the subsequent cooking step and results in a more uniform product. The temperature and time of the tempering step does not allow setting or substantial gelatinizing of the starch present in the admixture components.

The tempered material is then cooked at a temperature of 110° to 120°C, at a pressure of 10 to 15 p.s.i. for 10 to 30 minutes. The cooking is preferably done at 15 p.s.i. for about 12 minutes. The cooking can be done using any suitable steam, pressure cooker. The cooking step means a heat treatment which causes a loss of birefringence but is not so severe as to produce transparency of the farina particles. The cooking step is preferably accomplished using a rotating drum which is internally heated, or using a simple retort. Exposure therein must be of sufficient temperature-time contact so as to completely cook the product. The cooking should completely gelatinize the starch present in the composition. The cooked material is composed of particles which have increased to an average particle size of 12 to 60 mesh or larger (U.S. Standard).

The cooking step does not expand or puff the wheat particles.

The particle size reduction step eliminates lumps and large agglomerates. The preferred particle size reduction technique is grinding, although any suitable particle size reduction technique and equipment can be used. The product can, for example, be passed through a grinder with an inserted screen designed for the reduction of the size of the particles of cooked material; but preferably lump breakers are used to reduce the size of the cooked material particles.

The reduced-size material is then partially dried to 14 weight percent or less of water.

The water-impregnated material is then tempered.

The tempered material can be flaked using any suitable flaking equipment and method which do not expand or puff the wheat particles and which do not mechanically destroy the structure of the starch cells in the wheat particles. Flaking is basically a process or step of flattening the tempered, cooked wheat particles between rollers. For example, the tempered, cooked wheat material can be flaked by passing it between large steel cylinders (180 to 200 revolutions per minute, or higher), with the rolls cooled by internal water circulation (to avoid sticking at the high water content of the material to be flaked in the invention). Typically, screw conveyors or drag chain conveyors transport the tempered, cooked wheat material composition to the flaking rolls. Just before falling into the large steel flaking rolls, the cooked, dried wheat material is tempered at about 32° to 38°C (90° to 100°F.), and the wheat particles become plasticized. The temperature of the wheat particles during the flaking step is not allowed to rise above 49°C (120°F.). The pressure applied to the wheat material increases their diameter several times and decreases their thickness proportionately. When the flaked wheat particles leave the rolls, the flakes contain 14 weight percent or less, preferably about 13.5 percent, of moisture and are still flexible. The flakes are flexible and preferably have a thickness of about 0.011 inch.

Flaking, as used herein, is basically the flattening of the soft, cooked, wheat particles, having a moisture content of 14 percent by weight or less, between rollers. The cooking has gelatinized the starch in the wheat particles before the flaking step. The dry instant flakes of the invention have good consumer appeal in their crisp but friable texture, their rather bland flavor, and in the ease with which a portion thereof can be readied for consumption.

The flakes can be cooled, sieved and bagged using conventional techniques.

The flaked product usually has a moisture content of 11 or 12 to 14 weight percent. The dry, flaked product is quite stable and can be stored in a sealed container for at least 12 months. It is believed that, during preparation of the dry, flaked product, the starch is gelatinized, which halts enzymatic activity and provides good stability and shelf life for the dry, flaked product.

The dried, flaked product can be made ready-to-eat by reconstituting in a bowl with hot water, milk or other suitable edible liquid containing water. Usually milk or hot water is used for reconstitution. Sugar or other sweeteners, for example, can be added. The dried, flaked product is in a ready-to-eat or instant form and is truly an "instant" wheat farina-like product which can be prepared in a bowl by the consumer without a cooking step. The dried, flaked wheat product has excellent flavor and texture characteristics.

While not necessary, the ready-to-eat product can be reconstituted by cooking (boiling) for a minute or so. It is not necessary to have added disodium phosphate (e.g., 0.25 weight percent), although it can be used, to reduce the cooking time since reconstitution by cooking is only an option with the invention product.

Fortifying and other additives, such as, flavoring, colorant, salt, sugars, minerals, wheat germ, cocoa, antioxidants and the like, can be incorporated into the dried flaked wheat middlings. The additives include B-complex vitamins, malt, soluble iron compounds, vitamin A, vitamin C, BHA and BHT. Also, non-fat dry milk solids, (i.e., milk powder) or soybean protein may be added in an amount sufficient to create a final protein level of up to 10 to 20 percent.

Further about 5 to 8 percent of at least one fruit can be incorporated into the dried, flaked wheat material. The more popular dry fruits that can be used in the invention process include apple, apricot, blackberry, boysenberry, cherry, current, plum, elderberry, fig, gooseberry, grape, guava, loganberry, nectarine, peach, pear, pineapple, quince, raspberry, strawberry and other fruits or flavors. The flaked product of the invention is not subjected to a toasting or roasting step. Also, an emulsifier does not have to be used in the process or product of the invention.

Guar gum or alginates are not required or used in the processes or compositions of the invention. The use of guar gum in known dry, instant, farina products (cereals) was known to cause a lumping problem in the cereals upon rehydration or reconstitution. The prior invention described above uses guar gum to achieve several advantages and does not have any meaningful lumping problem. The invention product, which does not use guar gum or alginates, achieves those advantages plus others, and does not incur lumpiness upon rehydration. However, optionally gums, such as, arabic gum, and other gums can be used in the final formation (after flaking) of the invention flaked product. Such optional gums help hold the product together and help increase the viscosity in the rehydrated product.

The process of the invention can also be used to prepare instant, non-expanded, dried, flaked, ready-to-eat, cereal products from other than wheat farina. For example, cereal grains such as rice, barley, oats, rye, corn, millet, etc., can be used in the invention process in place of the wheat farina, or at least part thereof. Such cereal grains should be used in the particulate form which has a particle size within the approximate particle size range of wheat farina.

In one embodiment of the invention, the instant wheat flakes of the invention are admixed with instant oats to provide an oats-wheat instant cereal product. The instant oats can be obtained from commercial sources or by means of any suitable production process. The criterion for an "instant" oat product is that it can be added to hot water or hot milk and dissolved or suspended uniformly with a minimum of agitation, such as, by stirring with a spoon.

EXAMPLE 1

Dry wheat middlings are sprayed with 18 weight percent of water. The wetted wheat middlings are tempered with agitation for 10 minutes at a temperature of 35°C The tempered material is cooked in a pressure cooker for about 12 minutes at 15 p.s.i. The size of the particles is increased to about 12 mesh during cooking. The average particle size (lumps and agglomerates included) is reduced to about 0.125 inch by means of lump breakers. The cooked material is partially dried from about 23 to about 13.5 weight percent of water. The material is tempered with agitation for 40 minutes at 35°C The cooked, tempered wheat particles are flaked using large steel flaking rolls. The flaked particles have a uniform moisture content of 13.5 weight percent. The flaked farina has the following sieve analysis (U.S. Standard Sieve Series):

| Collected On Sieve Mesh | +4 | +20 | +30 | +50 | pan |
|---|---|---|---|---|---|
| Weight percent of flakes sieved | about 0.5 | about 46 | about 28 | about 25 | about 1 |

91.603 weight percent of flaked material (88 weight percent of farina and 12 weight percent of water) is thoroughly mixed in a blender with 8.397 weight percent of a preblend. The preblend contains 18.149 weight percent of dough salt, 0.204 weight percent of preservative, 53.018 weight percent of artificial creaming agent, 10.196 weight percent of guar gum, and the remainder a fortification mixture (wheat germ, iron, vitamins and flavorant) to produce the finished product. The blended product is conveyed by a conveyor to the packaging machine where it is packed in individual serving portions at 1 oz. per packet. 10 packets are packed per carton. The dried, flaked and mixed composition is readily reconstituted in a bowl by the addition of hot water to produce a breakfast cereal type of product that is quite appetizing in appearance, odor and taste, and is quite creamy and smooth in taste.

The types of final product can be plain or flavored, such as, brown sugar, apple and cinnamon, strawberry or maple brown sugar. The artificial creaming agent, in an amount up to 3 weight percent, enhances the flavor of, and whitens (lightens) the plain and strawberry products.

EXAMPLE 2

This example follows the procedure illustrated in the Figure:

Unprocessed (raw) wheat middlings are removed from bulk storage tanks and cleaned using Forsberg separators. The cleaned, raw, wheat middlings are weighed into a batch scale tank. The wheat middlings are conveyed to a ribbon mixer where water is sprayed on the middlings. The batch is mixed until the middlings are wetted (for approximately 10 minutes) to achieve a moisture content of 23 weight percent. The wetted wheat middlings are conveyed to a Johnson cooker (which is a steam pressure cooker) or continuous cooker. The wetted wheat middlings are cooked for 15 minutes at 13 p.s.i. The timing of the cooking starts at the moment steam is introduced into the cooker. At the end of the cooking period, the cooker is exhausted. The cooked wheat middlings are dumped onto a cooling conveyor and conveyed to a Fitz mill (used to reduce the large lumps) or lump breaker. (Further cooling, if necessary, can be done using cooling reels before treatment in the Fitz mill.) A number 3 screen (U.S. Standard) is used in the Fitz mill. The conveyor used to convey the cooled wheat material into the Fitz mill is a cooling and load-leveling belt conveyor which regulates the flow of material. The milled material is conveyed to a dryer operated at 70°C The water content of the material is reduced to 13.5 weight percent. The dried material (non-expanded, non-toasted) is passed to a scalper, with the oversized material being reduced in size in a Jacobson mill and returned to the dryer. The milled material is fed into a surge hopper and then conveyed to a feeder for the flaker. Cold water-cooled Lauhoff flaking rolls are used to flake the cooked material. (The material will stick to hot flaking rolls.) The flaked material has a density of 50 g/cc and a moisture content of 13.5 weight percent. The flaked material is then sifted and placed in barrels or a storage bin, or fed directly into production (that is, blending with fortification). Sufficient fortification mixture is added to the dried, flaked, wheat material to produce a fortified product.

0214044

1. Process for preparing a dry, instant, cereal grain product in flake form which will readily rehydrate with hot water comprising:

(a) impregnating material, which is cereal grain particles in a reduced-size state, with a sufficient amount of water to saturate the cereal grain material;

(b) tempering water-impregnated material (a) to produce a tempered material at uniform moisture;

(c) cooking tempered material (b) sufficiently to gelatinize the starch present in the cereal grain material, the average particle size of material (b) being increased thereby;

(d) reducing the average particle size of cooked material (c), cooked material (c) being in particulate form;

(e) partially drying material (d) to provide a partially-dried material having a water content of 14 or less weight percent, based on the total dry weight of the cereal grain material;

(f) tempering material (e) to produce a tempered material at uniform moisture; and

(g) flaking particulate material (f) to form a non-expanded, non-toasted, material in flake form, the dry, flaked product being capable of being readily rehydrated to have the texture and flavor characteristics of cooked cereal grain farina and no $\overline{0}214044$ guar gum being added to the composition before step A or during or between any of steps A to G.

2. Process as claimed in Claim 1 wherein the reduced-size cereal grain material is a wheat farina material.

3. Process as claimed in Claim 2 wherein the farina material has an average particle size of 20 to 40 mesh (U.S. Standard), the farina material is impregnated with 15 to 20 weight percent of water, based on the total dry weight of the farina material, the water-impregnated material (a) is tempered at a temperature of 30° to 40°C for about 5 to about 30 minutes, tempering step (b) is accompanied with the agitation of water-impregnated material (a), tempered material (b) is cooked at a temperature of 110° to 120°C, at a pressure of 5 to 15 p.s.i. and for 10 to 30 minutes, and cooked material (d) has a water content of about 15 to 26 weight percent, based on the total weight of the farina material.

4. Process as claimed in Claim 2 wherein the average particle size of cooked material (c) is reduced by means of lump breakers, material material (d) is dried sufficiently to lower the water content of material (d) to 14 weight percent or less, based on the total dry weight of the wheat farina material, material (e) is tempered at a temperature of 30° to 40°C for about 5 to about 15 minutes, flaked material (g) has a moisture content of 10 to 14 weight percent, based on the total weight of the farina-type material, and the dried flakes of the product have an average thickness of about 0.01 to about 0.012 inch.

5. Process as claimed in Claim 2 wherein dried flaked material (i) is cooled, sieved to a size of -6 to +50 U.S. Standard Sieve Series, and placed in containers.

6. Process as claimed in Claim 2 wherein about 6 to 30 weight percent, based on the total weight of dried flaked, particulate material (g) of at least one fortifying agent is added to dried, flaked, particulate material (g).

7. Process as claimed in Claim 2 wherein the liquid used to reconstitute the dry, flaked product is hot water or hot milk.

8. The dry, non-expanded, instant, wheat farina product in flake form prepared by the process of Claim 1.

9. Dry, non-expanded, non-toasted, instant, cereal grain farina product in flake form which is capable of readily rehydrating upon contact with hot water or hot milk, with increased swelling, to have the texture and flavor characteristics of cooked wheat farina.

10. The dry, instant, wheat farina product as claimed in Claim 9 wherein said dry flake product has a 0214044

size of -6 to +50 U.S. Standard Sieve Series, and the flakes of said dry product have an average thickness of about 0.01 to about 0.012 inch.

0214044

```
┌─────────────────┐              ┌─────────────────┐
│  Storage Tanks  │              │   Water Meter   │
└────────┬────────┘              └────────┬────────┘
         │                                │
┌────────▼────────┐              ┌────────▼────────┐
│   Separation    │              │      Tank       │
└────────┬────────┘              └────────┬────────┘
         │                                │
┌────────▼────────┐              ┌────────▼────────┐
│ Conveyor System │              │      Pump       │
└────────┬────────┘              └────────┬────────┘
         │                                │
┌────────▼────────┐              ┌────────▼────────┐
│  Ribbon Mixer   │◄─────────────│  Spray Nozzles  │
└────────┬────────┘              └─────────────────┘
         │
┌────────▼────────┐
│ Conveyor System │
└────────┬────────┘
         │
┌────────▼──────────────────────┐
│ Cooker or Continuous Cooker   │
└────────┬──────────────────────┘
         │
┌────────▼────────┐
│    Conveyor     │
└────────┬────────┘
         │
┌────────▼──────────────┐
│  Mill or Lump Breaker │
└────────┬──────────────┘
         │
┌────────▼────────┐
│    Conveyor     │
└────────┬────────┘
         │
┌────────▼────────┐
│     Dryer       │◄──────────────┐
└────────┬────────┘               │
         │                        │
┌────────▼────────┐        ┌───────┴───────┐
│    Scalper      │───────►│     Mill      │
└────────┬────────┘        └───────────────┘
         │
┌────────▼────────┐              ┌─────────────────┐
│    Conveyor     │              │    Conveyor     │
└────────┬────────┘              └────────┬────────┘
         │                                │
┌────────▼────────┐              ┌────────▼────────┐
│    Storage      │              │     Sifter      │
└────────┬────────┘              └────────┬────────┘
         │                                │
┌────────▼────────┐              ┌────────▼────────┐
│  Surge Hopper   │              │    Storage      │
└────────┬────────┘              └────────┬────────┘
         │                                │
┌────────▼────────┐              ┌────────▼──────────┐
│    Conveyor     │              │ Blending  with    │
└────────┬────────┘              │ Fortification,Etc.│
         │                       └───────────────────┘
┌────────▼────────┐
│     Feeder      │
└────────┬────────┘
         │
┌────────▼────────┐
│  Flaking Rolls  │
└─────────────────┘
```